# EUROPEAN PATENT APPLICATION

(11) **EP 4 668 202 A1**
(43) Date of publication of application: **24.12.2025**
(21) Application number: 24764227.5
(22) Date of filing: 04.03.2024
(51) Int. Cl.: G06Q 50/10, G06K 7/14, G06V 10/74, G08B 21/18, G09F 3/20, G06T 7/00, G06Q 30/06, G06Q 10/08

(54) **PRODUCT DISPLAY STATE MONITORING METHOD AND SYSTEM**

(30) Priority: 02.03.2023 KR 20230027867
(71) Applicant: SOLUM CO., LTD., Gyeonggi-do 16914 (KR)
(72) Inventor: LEE, Hyun Suk, Suwon-si, Gyeonggi-do 16543 (KR); KIM, Ji Eun, Seongnam-si, Gyeonggi-do 13618 (KR); KIM, Eo Jin, Suwon-si, Gyeonggi-do 16426 (KR)
(74) Representative: BCKIP Part mbB
(86) International application number: PCT/KR2024/002746
(87) International publication number: WO 2024/181828

(57) **Abstract**

Provided in one embodiment is a product display state monitoring method performed by means of a computing device including a processor for sensing a product display state on the basis of a captured image acquired using an imaging device that captures the area in which at least one electronic shelf label and at least one product are provided, the method comprising the steps of: identifying, from the captured image, a pattern code displayed on the at least one electronic shelf label; acquiring position information allocated in the pattern code from a server; determining a target image, which is an image of the area corresponding to the position information in the captured image; detecting a reference image, which is an image of the area corresponding to the position information in a planogram; and comparing the target image to the reference image.

## Description

### BACKGROUND OF THE INVENTION

### Technical Field

The present invention relates to a product display status monitoring method and system.

### Related Art

The use of electronic labels is gradually spreading in the field of applications such as display of product information of products displayed in a store. Electronic labels, called electronic shelf labels or electronic tags, are connected to a server via a gateway to receive product information to be displayed and display the received product information on an electronic paper display. The use of the electronic labels is expanding because the electronic labels operate with low-power consumption for extended battery life and allow display information to be changed via a communications network, thereby reducing store management labor costs.

When a new product is displayed on a shelf, an assignment procedure is required to enable an electronic label to display information on the product. Typically, when a store manager reads a barcode attached to an electronic label and a product barcode using a terminal to transmit the barcode to a management server, the management server assigns the electronic label to the product, registers this in a database, and transmits product information on the product to the electronic label so that the display is changed.

Meanwhile, a different type of products not assigned to the electronic shelf label may be placed on a shelf with the electronic shelf label, or the product may be out of stock and the shelf may be left empty. In this case, on-side staff of the store may return the product to a correct location to which the electronic shelf label having the product assigned thereto is attached or restock products in empty space. However, it is difficult and inefficient for the on-site staff to frequently monitor a product display status and correct a mis-display or restock out-of-stock products on the shelf. When a mis-display of products occurs frequently and out-of-stock products are not quickly restocked, store users may have difficulty finding products that the store users want. This may lead to decreased sales.

Furthermore, as product sales occur, types of products displayed on shelf may change or the number of products may decrease. Further, the number of products with low consumer demand may remain constant over time. Therefore, it is necessary to change product-related information that is displayed on the electronic label based on change in product display status. For example, when types of products displayed on the shelf change due to product rearrangement, names and types of products displayed on the electronic label may be changed. Further, when the number of products decreases, information such as "imminent out-of-stock" may be displayed on the electronic label, and when the number of products remains constant, information on a discount event for the products may be displayed to promote sales. To this end, the on-site staff of the store may check a type and number of displayed products to change product-related information displayed on the electronic labels, but the on-site staff frequently checking a product display status is not efficient and may be costly.

### DETAILED DESCRIPTION OF INVENTION

### TECHNICAL PROBLEMS

Various embodiments of the present disclosure are intended to provide a product display status monitoring method and system that sense display status of products based on a captured image acquired by photographing at least one electronic shelf label and at least one product provided on a shelf.

Various embodiments of the present disclosure are intended to provide a product display status monitoring method and system that sense display status of products by comparing a captured image acquired by photographing at least one electronic shelf label and at least one product provided on a shelf with a reference image acquired from a planogram based on locational information assigned to a pattern code displayed by the at least one electronic shelf label.

### TECHNICAL SOLUTION

An aspect provides,
a product display status monitoring method performed by a computing device including a processor configured to sense display status of products based on a captured image acquired by an imaging device capturing an area in which at least one electronic shelf label and at least one product are provided, the product display status monitoring method including: identifying a pattern code displayed on the at least one electronic shelf label from the captured image; acquiring location information assigned to the pattern code from a server; detecting a target image that is an image of an area corresponding to the location information in the captured images; detecting a reference image that is an image of the area corresponding to the location information in a planogram; and comparing the target image with the reference image.

In another aspect, the product display status monitoring method may further include transmitting data of information on a display status of the at least one product to a user terminal when it is determined that the target image is different from the reference image in the comparing of the target image with the reference image.

In another aspect, the transmitting of the data of the information on the display status of the at least one product to the user terminal may include transmitting a product mis-display alarm for an area corresponding to the location information assigned to the pattern code to the user terminal when it is determined that a type of target product included in the target image is different from a type of reference product included in the reference image.

In another aspect, the transmitting of the data of the information on the display status of the at least one product to the user terminal may include detecting a target matching image that is an image including the same target matching product as the target product determined to be different from the reference product from the planogram, and providing data of location information assigned to a pattern code of an electronic shelf label to which the target matching product is assigned to the user terminal.

In another aspect, the transmitting of the data of the information on the display status of the at least one product to the user terminal may include transmitting a reference product out-of-stock alarm for an area corresponding to the location information assigned to the pattern code to the user terminal when it is determined that the target image does not include any product including a reference product included in the reference image.

In another aspect, the product display status monitoring method may further include receiving a product order user input for ordering the out-of-stock reference product; and transmitting the product order user input to an external seller server.

In another aspect, the transmitting of the data of the information on the display status of the at least one product to the user terminal may include transmitting information of the number of target products to the electronic shelf label and the user terminal when a type of target product included in the target image is the same as a type of reference product included in the reference image and the number of target products is different from the number of reference products.

In another aspect, the transmitting of the data of the information on the display status of the at least one product to the user terminal may include transmitting data of updated discount information for the target products to the electronic shelf label and the user terminal when a type of target product included in the target image is the same as a type of reference product included in the reference image and the number of target products is equal to or larger than a threshold value.

In another aspect, the product display status monitoring method may further include before the identifying of the pattern code, transmitting a pattern code display signal to the at least one electronic shelf label; and capturing, by the imaging device, an area in which the at least one electronic shelf label and the at least one product are provided to acquire the captured image when the pattern code is displayed on the at least one electronic shelf label according to the pattern code display signal.

Another aspect provides,
a product display status monitoring system for sensing a display status of at least one product provided on a shelf, the product display status monitoring system including: at least one electronic shelf label provided at a location corresponding to the at least one product, and displaying a pattern code; an imaging device configured to capture an area in which the at least one electronic shelf label and the at least one product is provided and acquire a captured image; and a computing device including a memory storing a program for performing a product display status monitoring method for sensing the display status of the at least one product based on the captured image, and a processor configured to execute the program.

### EFFECT OF INVENTION

According to various embodiments of the present disclosure, it is possible to provide a product display status monitoring method and system that sense display status of products based on a captured image acquired by photographing at least one electronic shelf label and at least one product provided on a shelf.

In various embodiments of the present disclosure, it is possible to provide a product display status monitoring method and system that sense display status of products by comparing a captured image acquired by photographing at least one electronic shelf label and at least one product provided on a shelf with a reference image acquired from a planogram based on locational information assigned to a pattern code displayed by the at least one electronic shelf label.

In various embodiments of the present disclosure, it is possible for a user to quickly and efficiently ascertain a location of a desired product by checking a display status of products assigned to the electronic shelf label based on the location information assigned to the pattern code displayed on the electronic shelf label and providing an alarm regarding the display status of the products to the user terminal, and it is possible to increase sales by enabling shelves to be quickly restocked with out-of-stock products.

### BRIEF DESCRIPTION OF THE DRAWING

FIG. 1 illustrates an illustrative configuration of a product display status monitoring system according to an embodiment.
FIG. 2 illustrates an illustrative configuration of the electronic shelf label according to an embodiment.
FIG. 3 is a block diagram illustrating an illustrative configuration of a server according to an embodiment.
FIG. 4 is a block diagram illustrating an illustrative configuration of a user terminal according to an embodiment.
FIG. 5 is a flowchart illustrating a product display status monitoring method according to an embodiment.
FIG. 6 illustrates an example of a captured image acquired by an imaging device capturing an area in which an electronic shelf label and a product are provided according to an embodiment.
FIG. 7 illustrates an example of a planogram according to an embodiment.
FIG. 8 illustrates an example of a product mis-display alarm displayed on the user terminal according to an embodiment.
FIG. 9 illustrates an example of a captured image acquired by an imaging device capturing an area in which an electronic shelf label and a product are provided according to another embodiment.
FIG. 10 illustrates an example of an out-of-stock alarm displayed on the user terminal according to an embodiment.
FIG. 11 illustrates an example of a captured image acquired by an imaging device capturing an area in which an electronic shelf label and a product are provided according to yet another embodiment.
FIG. 12 illustrates an example of product discount information displayed on an electronic shelf label according to an embodiment.

### BEST MODE FOR CARRYING OUT THE INVENTION

The present disclosure may be subjected to various transformations and may have various embodiments, and specific embodiments will be illustrated in the drawings and described in detail in the detailed description. The effects and characteristics of the present disclosure and methods for achieving these will become clear from embodiments that will be described in detail later together with the drawings. However, the present disclosure is not limited to the embodiments disclosed below, and can be implemented in various forms. In the following embodiments, terms such as first and second are used for the purpose of distinguishing one component from another component, rather than in a limiting sense. Further, singular expressions include plural expressions unless the context clearly indicates otherwise. In addition, terms such as include or have mean presence of characteristics or components described in the specification, and do not preclude a likelihood of one or more other characteristics or components being added. Further, in the drawings, sizes of the components may be exaggerated or reduced for the convenience of description. For example, since sizes and thicknesses of the respective components shown in the drawings are arbitrarily shown for the convenience of description, the present disclosure is not necessarily limited to what is shown.

Hereinafter, embodiments of the present disclosure will be described in detail with reference to the accompanying drawings, the same or corresponding components are denoted by the same drawing reference signs upon description with reference to the drawings, and redundant descriptions thereof will be omitted.

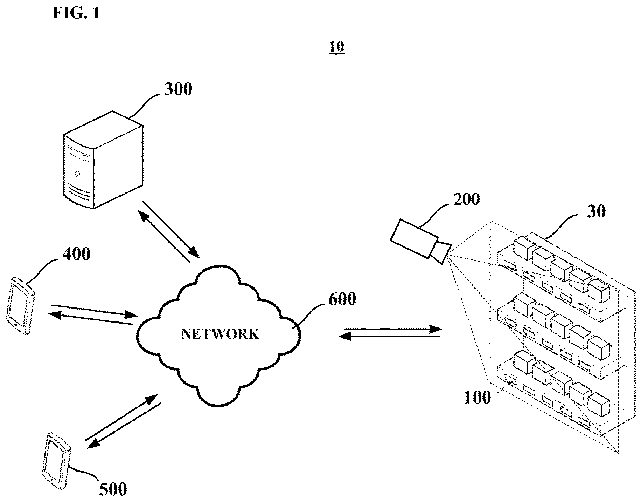

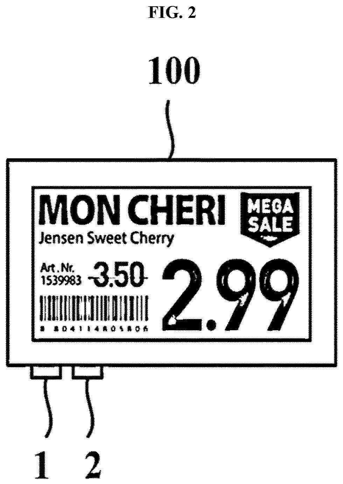

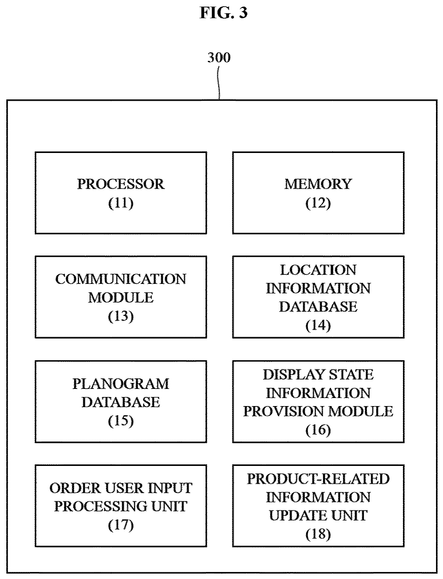

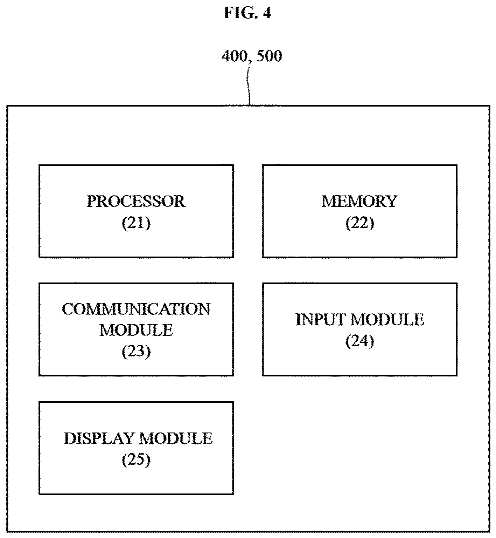

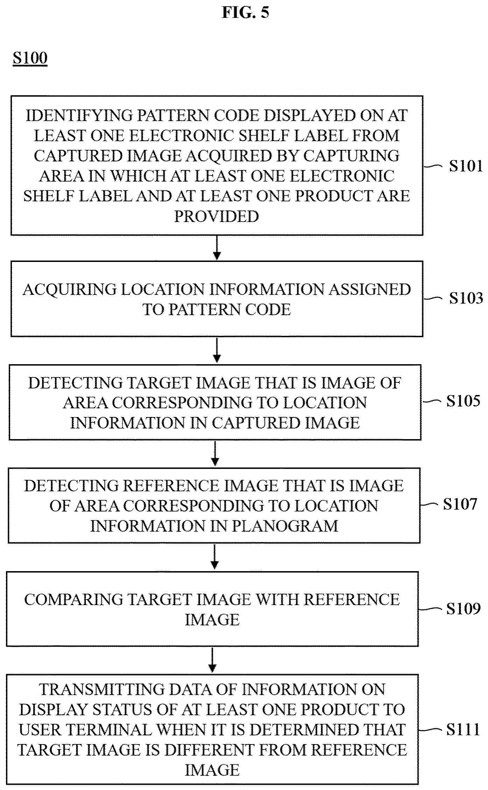

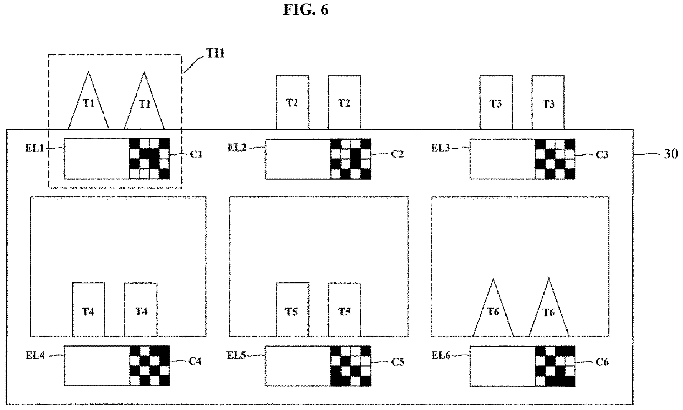

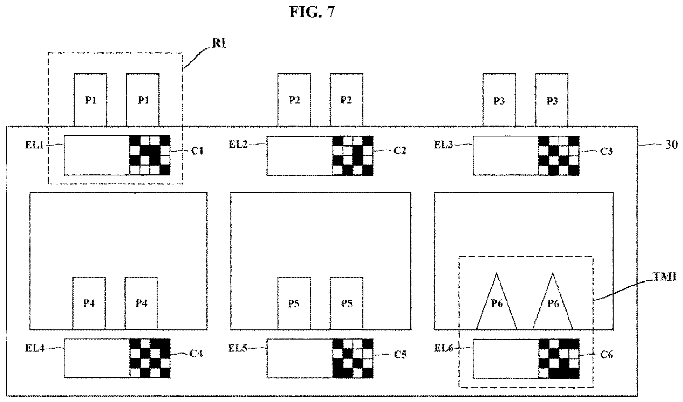

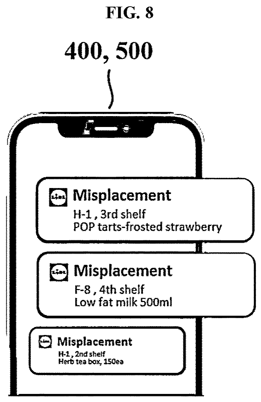

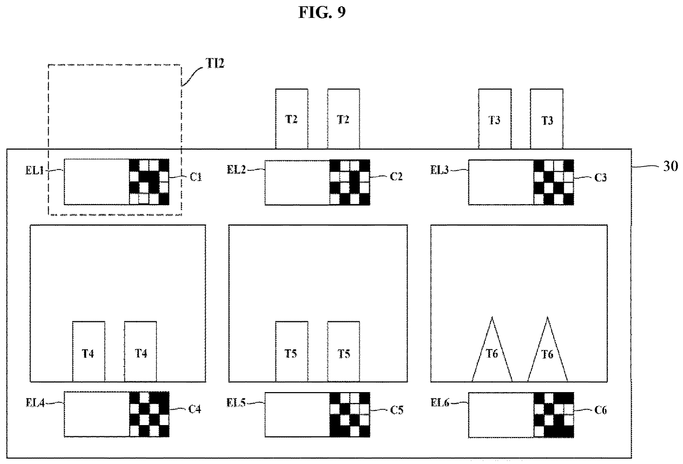

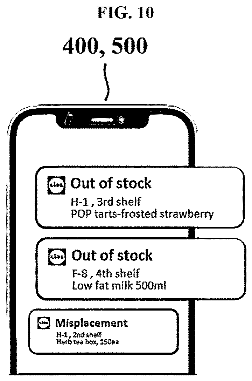

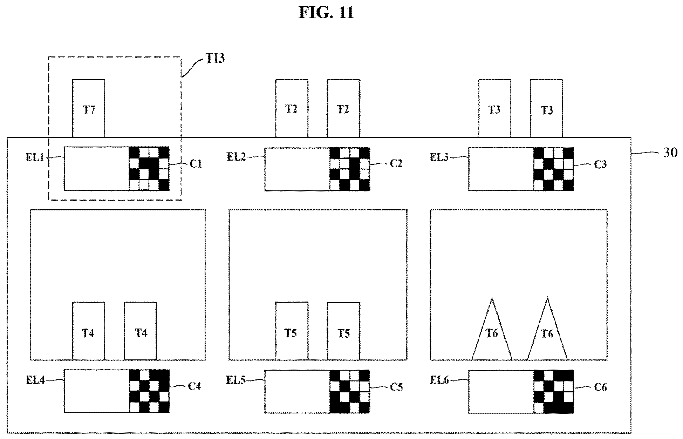

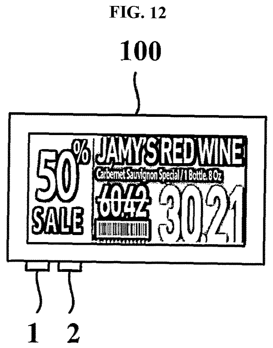

FIG. 1 illustrates an illustrative configuration of a product display status monitoring system 10 according to an embodiment. FIG. 2 illustrates an illustrative configuration of an electronic shelf label 100 according to an embodiment. FIG. 3 is a block diagram illustrating an illustrative configuration of a server 300 according to an embodiment. FIG. 4 is a block diagram illustrating an illustrative configuration of a user terminal 400 or 500 according to an embodiment. FIG. 5 is a flowchart illustrating a product display status monitoring method S100 according to an embodiment. FIG. 6 illustrates an example of a captured image acquired by an imaging device capturing an area in which an electronic shelf label and a product are provided according to an embodiment. FIG. 7 illustrates an example of a planogram according to an embodiment. FIG. 8 illustrates an example of a product mis-display alarm displayed on the user terminal 400 or 500 according to an embodiment. FIG. 9 illustrates an example of a captured image acquired by an imaging device capturing an area in which an electronic shelf label and a product are provided according to another embodiment. FIG. 10 illustrates an example of an out-of-stock alarm displayed on the user terminal 400 or 500 according to an embodiment. FIG. 11 illustrates an example of a captured image acquired by an imaging device capturing an area in which an electronic shelf label and a product are provided according to yet another embodiment. FIG. 12 illustrates an example of product discount information displayed on the electronic shelf label 100 according to an embodiment.

### - System 10

Referring to FIG. 1, the product display status monitoring system 10 for sensing the display status of the products provided on a shelf according to an embodiment may include an electronic shelf label 100, the imaging device 200, a server 300, a first user terminal 400, and a second user terminal 500. The system 10 may provide an environment in which mis-display of products can be efficiently corrected or out-of-stock products can be restocked on the shelf without field staff having to check a product display status directly and frequently.

The electronic shelf label 100, the imaging device 200, the server 300, and the user terminals 400 and 500 may be connected to each other via a network 600. Here, the network 600 according to the embodiment may be a connection structure that enables information exchange between respective nodes, such as the electronic shelf label 100, the imaging device 200, the server 300, and the user terminals 400 and 500. For example, the network 600 may include, but is not limited to, a 3rd Generation Partnership Project (3GPP) network, a Long Term Evolution (LTE) network, a World Interoperability for Microwave Access (WIMAX) network, the Internet, a Local Area Network (LAN), a Wireless Local Area Network (WLAN), a Wide Area Network (WAN), a Personal Area Network (PAN), a Bluetooth network, a satellite broadcasting network, an analog broadcasting network, a Digital Multimedia Broadcasting (DMB) network, and the like.

The electronic shelf label 100 may be wirelessly connected to the server 300 through a separate gateway (not shown). However, the present invention is not limited thereto, and the electronic shelf label 100 may be connected to the user terminals 400 and 500 through wireless communication. For example, the electronic shelf label 100 may be paired with the user terminals 400 and 500 based on a Bluetooth function.

Hereinafter, the electronic shelf label 100, the imaging device 200, the server 300, and the user terminals 400 and 500 included in the system 10 will be described in detail with reference to the accompanying drawings.

### - Electronic Shelf Label 100

The electronic shelf label 100 may be an electronic device mounted on a shelf 30 to display information related to products displayed on the shelf 30. For example, the electronic shelf label 100 may display product-related information such as a Korean product name, an English product name, a country of origin, product price, raw materials, and weight/calories.

The electronic shelf label 100 may include a display module that displays a template to which product-related information has been applied on the front, and a communication module capable of communicating with the server 300 and the user terminals 400 and 500. Furthermore, all components and programs capable of Bluetooth communication may be installed in the electronic shelf label 100.

The display module included in the electronic shelf label 100 may include an electronic paper display (EPD) that maintains product information display status even when power is not supplied. The electronic paper display is suitable for the electronic shelf label 100 requiring reduced power consumption because its bistability allows a display status to be maintained for a long period of time even when power supply is interrupted, a twist ball type using hemispherical twist balls charged with electrostatic charge, an electrophoretic display using an electrophoresis method and microcapsules, and a cholesterol liquid crystal display using cholesterol liquid crystals are known as the electronic paper display.

However, the present invention is not limited thereto, and the display module included in the electronic shelf label 100 may include any one of a liquid crystal display (LCD), a thin film transistor-liquid crystal display (TFT LCD), an organic light-emitting diode (OLED), a flexible display, and a 3D display.

Referring to FIG. 2, the electronic shelf label 100 may include a display module that displays product-related information on one area of an outer surface. Furthermore, the electronic shelf label 100 may include at least one button 1 or 2. For example, the electronic shelf label 100 may include a first button 1 and a second button 2. The first button 1 and the second button 2 may be provided in one area of the outer surface of the electronic shelf label 100.

A pairing signal may be transmitted from the electronic shelf label 100 to the user terminal 400 or 500 according to user input through the first button 1 and/or the second button 2. Accordingly, the electronic shelf label 100 may be paired with the user terminal 400 or 500 via Bluetooth. For example, when a user presses the first button 1 and/or the second button 2, a pairing signal may be transmitted from the electronic shelf label 100 to the user terminal 400 or 500, and the electronic shelf label 100 may be paired with the user terminal 400 or 500 based on a Bluetooth function.

### - Imaging Device 200

The imaging device 200 may be installed around the shelf 30 to photograph the electronic shelf label 100 and an area in which the products are provided on the shelf 30 and acquire a captured image. The imaging device 200 may be installed to be movable around the shelf 30 to periodically photograph the electronic shelf label 100 and the products on the shelf 30.

In a state where a plurality of shelves 30 are arranged, the imaging device 200 may be installed on a first shelf, and the imaging device 200 may be configured to capture the electronic shelf label 100 and products on a second shelf facing the first shelf.

A plurality of different types of products may be displayed on the shelf 30, and a plurality of electronic shelf labels 100 may be provided on the shelf 30 to correspond to respective locations at which the plurality of products are provided. In this case, information data of a plurality of different types of products may be assigned to the plurality of electronic shelf labels 100 provided at locations corresponding to the plurality of products. The imaging device 200 may photograph the plurality of products and the plurality of electronic shelf labels 100 provided on the shelf 30 to acquire a captured image. Accordingly, the plurality of products and the plurality of electronic shelf labels 100 provided to correspond to the plurality of products may appear in the captured image.

### - Server 300

The server 300 may perform a series of processes to provide an environment necessary for performing the product display status monitoring method that senses the display status of the products provided on the shelf.

Specifically, in an embodiment, the server 300 may exchange necessary data with the electronic shelf label 100 and the imaging device 200 to enable the product display status monitoring method to be performed based on the captured image acquired by the imaging device 200 photographing at least one electronic shelf label 100 and at least one product provided on the shelf 30. Accordingly, the server 300 may provide the environment necessary for performing the product display status monitoring method.

For example, the server 300 may provide an environment in which a product display status monitoring application that senses the display status of the products provided on the shelves can operate on the user terminals 400 and 500 (for example, a mobile type computing device and/or a desktop type computing device). The server 300 may include an application program, data, and/or instructions for an operation of the product display status monitoring application, and transmit data based thereon to the user terminals 400 and 500.

Furthermore, the server 300 may provide license keys to the user terminals 400 and 500. The server 300 may provide a monitoring license key that grants the user terminals 400 and 500 the authority to receive monitoring information on the display status of the products. For example, a store's field staff or a store customer using the user terminals 400 or 500 may check the monitoring information on the display status of the products using the user terminal 400 or 500 that has received the monitoring license key.

Referring to FIG. 3, the server 300 may be implemented as a predetermined computing device including at least one processor 11 for data processing, a memory 12 that stores, for example, application programs, data and/or instructions, at least one communication module 13 for data exchange with an external device, a location information database 14 that stores location information of the electronic shelf label 100, a planogram database 15 that stores a planogram showing a state in which products and the electronic shelf labels 100 are provided on the shelf 30, a display status information provision module 16 that provides product display status information to the user terminals 400 and 500, an order user input processing unit 17 that processes product order user input from the user terminals 400 and 500, and a product-related information update unit 18 that updates product-related information displayed on the electronic shelf label 100.

The processor 11 may control an overall operation of components included in the server 300 to provide an environment in which the product display status monitoring application can operate to the user terminals 400 and 500.

The processor 11 may be a system-on-chip (SOC) including, for example, a central processing unit (CPU) and/or a graphics processing unit (GPU), and may execute an operating system (OS) and/or the application programs stored in the memory 12.

In addition, the processor 11 may internally communicate with each component included in the server 300 via a system bus, and may include one or more predetermined bus structures, including a local bus.

Further, the processor 11 may be implemented using at least one of an application specific integrated circuit (ASIC), a digital signal processor (DSP), a digital signal processing device (DSPD), a programmable logic device (PLD), a field programmable gate array (FPGA), a controller, a microcontroller, a microprocessor, and other electrical units for performing functions.

The memory 12 may store one or more of an operating system (OS), various application programs, data, and instructions to provide an environment necessary for performing the product display status monitoring method.

Further, the memory 12 may include a program area and a data area. Here, the program area according to the embodiment may be associated between an operating system (OS) that boots the server 300 and functional elements, and the data area may store data generated when the server 300 is used.

In an embodiment, the memory 12 may be any storage device, such as a ROM, a RAM, an EPROM, a flash drive, or a hard drive and may also be a web storage that performs a storage function on the Internet. Furthermore, the memory 12 may be a removable storage medium on the server.

The communication module 13 may include various types of communication devices that enable the server 300 to transmit and receive data to and from an external device. The server 300 may transmit data based on, for example, application programs, data, and/or instructions for an operation of the product display status monitoring application to the user terminals 400 and 500 via the communication module 13.

The location information database 14 may store the location information of the electronic shelf label 100. A plurality of electronic shelf labels 100 may be provided on the shelf 30 to correspond to a plurality of products. These plurality of electronic shelf labels 100 may be disposed at respective specific locations on the shelf 30, and specific location information of the plurality of electronic shelf labels 100 with respect to the shelves 30 may be stored in the location information database 14. Each of the plurality of electronic shelf labels 100 may display a unique pattern code (for example, a 2D code), and location information of each of the plurality of electronic shelf labels 100 may be assigned to the unique pattern code of each of the plurality of electronic shelf labels 100. For example, among the plurality of electronic shelf labels 100, a first electronic shelf label may be provided on a second floor, third column of the first shelf among the plurality of shelves 30. In this case, the second floor, third column of the first shelf, which is location information of the first electronic shelf label, may be stored to correspond to a pattern code displayed by the first electronic shelf label in the location information database 14.

The planogram database 15 may store a planogram showing a state in which products and electronic shelf labels 100 are provided on the shelf 30. The planogram may be an image showing a state in which the products and the electronic shelf labels 100 are displayed on the shelf 30.

The plurality of products and the plurality of electronic shelf labels 100 may be provided on the shelf 30. For example, the plurality of electronic shelf labels 100 and the plurality of products assigned to the plurality of electronic shelf labels 100 may be displayed at specific locations on the shelf 30. The planogram may show a state in which the plurality of products and the plurality of electronic shelf labels 100 are displayed to correspond to each other on the shelf 30.

The planogram database 15 is included in the server 300, but the present invention is not limited thereto, and the planogram database 15 may be implemented in the form of a server independent of the server 300.

The display status information provision module 16 may provide the information on the display status of the products to the user terminals 400 and 500 based on a result of monitoring the display status of the products using the captured images acquired by the imaging device 200. For example, when the result of monitoring the display status of the products indicates that the product assigned to the electronic shelf label 100 provided at the specific location on the shelf 30 is sold out, the display status information provision module 16 may provide an alarm indicating "out of stock" to the user terminals 400 and 500. In addition, when a product of a different type from the product assigned to the electronic shelf label 100 is provided at a location corresponding to the electronic shelf label 100, the display status information provision module 16 may provide an alarm indicating a "mis-display of product" to the user terminals 400 and 500.

The order user input processing unit 17 may receive a product order user input for ordering a product from the electronic shelf label 100. For example, when a result of monitoring the display status of the products indicates that the product corresponding to the electronic shelf label 100 at the specific location is out of stock, the user may press the button 1 or 2 of the electronic shelf label 100 to generate a product order user input. The product order user input received by the electronic shelf label 100 may be transmitted to the order user input processing unit 17 via the network 600.

However, the present invention is not limited thereto, and the user may also transmit the product order user input to the order user input processing unit 17 via the user terminals 400 and 500. For example, when an out-of-stock alarm is displayed on the user terminals 400 or 500, a product order tab may be displayed on the user terminals 400 or 500, and when the user clicks the product order tab, the product order user input may be transmitted to the order user input processing unit 17.

Furthermore, the order user input processing unit 17 may transmit the product order user input received from the electronic shelf label 100 to an external seller server. The external seller server may receive the product order user input from the order user input processing unit 17, and the seller may deliver the product based on the received product order user input.

The product-related information update unit 18 may update the product-related information displayed on the electronic shelf label 100 based on the results of monitoring the display status of the products. For example, when the result of monitoring the display status of the products indicates that the product corresponding to the electronic shelf label 100 provided at the specific location on the shelf 30 is out of stock, the product-related information update unit 18 may control the electronic shelf label 100 so that the electronic shelf label 100 displays text "out of stock". In addition, when result of monitoring the display status of the products indicates that the number of products corresponding to the electronic shelf label 100 provided at the specific location on the shelf 30 is equal to or larger than a threshold value, the electronic shelf label 100 may be controlled so that updated discount information for the products is displayed on the electronic shelf label 100 to promote product sales.

Although a case in which the server 300 according to an embodiment performs the functions and operations as described above has been described, an external device (for example, the user terminals 400 and 500) may perform at least some of the functions and operations performed by the server 300, and the server 300 may further perform at least some of the functions and operations performed by the external device in some embodiments.

### - User terminals 400 and 500

The user terminals 400 and 500 may be predetermined computing devices in which the product display status monitoring application is installed. The user terminals 400 and 500 may be divided into a first user terminal 400 and a second user terminal 500 depending on users. For example, the user of the first user terminal 400 may be a field employee, and the user of the second user terminal 500 may be a customer of a store. However, the first user terminal 400 and the second user terminal 500 may have substantially the same structure.

The product display status monitoring application may be installed in the user terminals 400 and 500. The user terminals 400 and 500 may display the information on the display status of the products based on the results of monitoring the product display status from the server 300.

The user terminals 400 and 500 may be implemented as, for example, a computer or portable terminal that can access the server 300 via the network 600. Here, the computer may include, for example, a desktop computer, a laptop computer, or VR HMD (such as HTC VIVE, Oculus Rift, GearVR, DayDream, or PSVR) with a web browser. Here, the VR HMD may be any of a model for a PC (such as HTC VIVE, Oculus Rift, FOVE, or Deepon), a mobile model (such as GearVR, DayDream, Storm Magic, or Google Cardboard), a model for a consoled (PSVR), and a stand-alone model (such as Deepon or PICO) implemented independently. The portable terminal is a wireless communication device that ensures portability and mobility, and may include, for example, a smartphone, a tablet PC, a wearable device, and any device with a communication module for Bluetooth (BLE; Bluetooth Low Energy), NFC, RFID, ultrasonic, infrared IR, WiFi, LiFi, or the like.

Referring to FIG. 4, the user terminal 400 or 500 may include a processor 21, a memory 22, a communication module 23, an input module 24, and a display module 25. Various components included in the user terminal 400 or 500 may be designed to be included in a housing of the user terminal 400 or 500.

In an embodiment, the processor 21 may control an overall operation of components included in the user terminals 400 and 500 through the product display status monitoring application in the memory 22 in order to provide a product display status monitoring environment so that mis-display of products can be efficiently corrected or out-of-stock products can be restocked on the shelf

For example, the processor 21 may control operations of the communication module 23 and the display module 25 so that the information on the display status of the products received from the electronic shelf label 100 through the communication module 70 may be displayed on the display module 25. In addition, the processor may control operations of the input module 24 and the communication module 23 so that the product order user input received through the input module 24 is transmitted to the external seller server through the communication module 23.

The processor 21 may include a central processing unit (CPU) and/or a graphics processing unit (GPU). Further, the processor 50 may include at least one of an application specific integrated circuit (ASIC), a digital signal processor (DSP), a digital signal processing device (DSPD), a programmable logic device (PLD), a field programmable gate array (FPGA), a controller, a microcontroller, a microprocessor, and other electrical units for performing functions.

The memory 22 may store instructions and data that can be used to create a product display status monitoring environment. The product display status monitoring application may be stored in the memory 60. The product display status monitoring application may provide various types of user interfaces UIs for providing the product display status monitoring environment.

The memory 22 may include at least one non-transitory computer-readable storage medium and a temporary computer-readable storage medium. For example, the memory 22 may be any storage device such as a ROM, EPROM, flash drive, or hard drive. In addition, the memory 22 may include a web storage that performs a data storage function on the Internet.

The communication module 23 may include various types of communication devices that enable data transmission and reception to and from an external device. For example, the communication module 23 may transmit and receive data to and from the electronic shelf label 100 and/or the server 300 via a wireless network.

The communication module 23 may wirelessly transmit and receive data to and from at least one of a base station, an external terminal, and an arbitrary server on a mobile communication network established through a communication device capable of performing technical standards or communication schemes (for example, Long Term Evolution (LTE), Long Term Evolution-Advanced (LTE-A), 5G NR (New Radio), or Wi-Fi) for mobile communication, short-range communication schemes, or the like.

Furthermore, the communication module 23 may be configured to transmit and receive data to and from an external electronic device via Bluetooth. For example, the communication module 23 may receive the pairing signal from the electronic shelf label 100 and be paired with the electronic shelf label 100 via Bluetooth.

The input module 24 may be configured to receive various types of user input of users of the user terminal 400 or 500. For example, the input module 24 may include a touch screen that receives a user's touch input. However, the present invention is not limited thereto, and the input module 24 may further include a keyboard capable of receiving user input in the form of characters.

The display module 25 may display the product display status monitoring application stored in the memory 22. For example, the display module 90 may include a display device that displays various types of user interface (UI) images for providing the product-related information editing environment.

The display module 25 may include any one of a liquid crystal display (LCD), a thin film transistor-liquid crystal display (TFT LCD), an organic light emitting diode (OLED), a flexible display, and a 3D display.

### -Product Display status Monitoring Method S100

Hereinafter, the method S100 of monitoring the display status of products through the product display status monitoring application executed by at least one processor 21 of the user terminal 400 or 500 according to various embodiments will be described in detail with reference to FIGS. 5 to 12.

In various embodiments, at least one processor 21 of the user terminal 400 or 500 may execute the product display status monitoring application stored in at least one memory 22 or cause the product display status monitoring application to operate in a background.

Hereinafter, the at least one processor 21 of the user terminal 400 or 500 operates to execute instructions of the product display status monitoring application to perform a method of providing the environment necessary for performing the product display status monitoring method S100 described above, but for convenience of description, a case in which the product display status monitoring application rather than the at least one processor 21 of the user terminal 400 or 500 performs the product display status monitoring method S100 will be briefly described.

FIG. 5 is a flowchart illustrating the product display status monitoring method S100 according to an embodiment.

Referring to FIGS. 5 and 6, the product display status monitoring method S100 may include a step S101 of identifying a pattern code C1, C2, C3, C4, C5, or C6 displayed on at least one electronic shelf label 100 from a captured image acquired by photographing an area in which at least one electronic shelf label 100 and at least one product are provided, a step S103 of acquiring location information assigned to the pattern code C1, C2, C3, C4, C5, or C6, a step S105 of detecting a target image TI1 that is an image of an area corresponding to the location information in the captured image, a step S107 of detecting a reference image RI that is an image of an area corresponding to the location information in a planogram, and a step S109 of comparing the target image TI1 with the reference image RI.

In addition, the product display status monitoring method S100 may further include a step S111 of transmitting data of information on the display status of at least one product to the user terminals 400 and 500 when it is determined that the target image TI1 is different from the reference image RI.

. In the step S101 of identifying the pattern code C1, C2, C3, C4, C5, or C6 displayed on the electronic shelf label 100 from the captured image, the processor 11 of the server 300 may control the imaging device 200 so that the imaging device 200 photographs an area on the shelf 30 in which at least one electronic shelf label 100 and at least one product are provided, thereby acquiring the captured image. For example, referring to FIG. 6, the captured image may include a plurality of electronic shelf labels EL1, EL2, EL3, EL4, EL5, and EL6 provided on the shelf 30 and a plurality of products T1, T2, T3, T4, T5, and T6 provided to correspond to the plurality of electronic shelf labels EL1, EL2, EL3, EL4, EL5, and EL6. The imaging device 200 may transmit the acquired captured image to the server 300 and/or the user terminals 400 and 500 via the network 600.

In addition, in step S101, the processor 11 of the server 300 may identify the pattern codes C1, C2, C3, C4, C5, and C6 displayed on the electronic shelf labels 100 from the captured image through image analysis. Here, the pattern codes C1, C2, C3, C4, C5, and C6 may be 2D codes. For example, the processor 11 may identify a first pattern code C1 among the plurality of pattern codes C1, C2, C3, C4, C5, and C6 included in the captured image.

However, the present invention is not limited thereto, and the processor 21 of the user terminal 400 or 500 may also perform a step of identifying the pattern codes C1, C2, C3, C4, C5, and C6.

In step S103 of acquiring the location information assigned to the pattern code, the processor 11 of the server 300 may acquire location information assigned to the pattern code C1, C2, C3, C4, C5, or C6 identified in step S101 from the location information database 14. For example, the processor 11 may acquire t location information assigned to the first pattern code C1 identified in step S101.

However, the present invention is not limited thereto, and the processor 21 of the user terminal 400 or 500 may also acquire the location information assigned to the pattern code C1, C2, C3, C4, C5, or C6 identified in step S101 from the location information database 14.

In step S105 of detecting the target image, the processor 11 of the server 300 may detect the target image from the captured image based on the location information acquired in step S103. The target image may be an image of an area corresponding to the location information acquired in step S103.

For example, the processor 11 may detect a first target image TI1 that is an image of an area corresponding to location information of the first pattern code C1 from the captured image. In this case, referring to FIG. 6, the first target image TI1 may include a first electronic shelf label EL1 displaying the first pattern code C1 and target products T1 provided in the area corresponding to the location information of the first pattern code C1.

However, the present invention is not limited thereto, and the processor 21 of the user terminal 400 or 500 may also detect the target image based on the location information of the identified pattern code C1, C2, C3, C4, C5, or C6 acquired in step S103.

In step S107 of detecting the reference image, the processor 11 of the server 300 may detect the reference image from the planogram stored in the planogram database 15 based on the location information acquired in step S103.

For example, referring to FIG. 7, the planogram may include a state in which a plurality of electronic shelf labels EL1, E21, EL3, EL4, EL5, and EL6 and a plurality of products P1, P2, P3, P4, P5, and P6 provided to correspond to the plurality of electronic shelf labels EL1, E21, EL3, EL4, EL5, and EL6 are displayed on the shelf 30. In addition, in the planogram, the plurality of electronic shelf labels EL1, E21, EL3, EL4, EL5, EL6 may display a plurality of pattern codes C1, C2, C3, C4, C5, and C6.

Here, the reference image refers to an image including the plurality of electronic shelf labels EL1, E21, EL3, EL4, EL5, and EL6 and the products P1, P2, P3, P4, P5, and P6 assigned to the plurality of electronic shelf labels EL1, E21, EL3, EL4, EL5, and EL6 in the planogram. The products P1, P2, P3, P4, P5, and P6 assigned to the plurality of electronic shelf labels EL1, E21, EL3, EL4, EL5, and EL6 may be referred to as reference products.

For example, referring to FIG. 7, the processor 11 may detect a first reference image RI1 including the first electronic shelf label EL1 and a first reference product P1 assigned to the first electronic shelf label EL1.

However, the present invention is not limited thereto, and the processor 21 of the user terminal 400 or 500 may detect the reference image from the planogram stored in the planogram database 15 based on the location information acquired in step S103.

In step S109 of comparing the target image with the reference image, the processor 11 of the server 300 may compare the target image with the reference image.

For example, the processor 11 may compare the first target image TI1 with the first reference image RI1. Here, the first target image TI1 that is a comparison target and the first reference image RI1 may include the same first electronic shelf label EL1.

The processor 11 may determine whether the target product T1 included in the first target image TI1 is the same as a reference product P1 of a second target image RI1 based on the comparison between the first target image TI1 and the first reference image RI1.

However, the present invention is not limited thereto, and the processor 21 of the user terminal 400 or 500 may also compare the target image with the reference image.

In step S111 of transmitting the data of the information on the display status of at least one product to the user terminals 400 and 500, when the processor 11 of the server 300 determines in step S109 that the first target image TI1 is different from the first reference image RI1, data of information on the display status of the target product T1 actually displayed on the shelf 30 may be transmitted to the user terminals 400 and 500.

For example, referring to FIGS. 6 and 7, the target product T1 included in the first target image TI1 and the reference product P1 included in the first reference image RI1 may be determined to be different from each other. That is, the reference product P1 assigned to the first electronic shelf label EL1 should be displayed in the area corresponding to the location information of the first electronic shelf label EL1, but a customer or on-site staff places the target product T1 different from the reference product P1 in the area corresponding to the location information of the first electronic shelf label EL1, resulting in a mis-display of the product.

Thus, when the processor 11 of the server 300 determines in step S109 that the type of reference product T1 included in the first target image TI1 is different from the type of reference product P1 included in the first reference image RI1, the processor 11 may transmit a product mis-display alarm for the area corresponding to the location information assigned to the first pattern code C1 of the first electronic shelf label EL1 to the user terminals 400 and 500.

Referring to FIG. 8, the product mis-display alarm may be displayed on the user terminals 400 and 500. For example, information on a location at which a specific product is mis-displayed may be displayed on the user terminals 400 and 500. However, the present invention is not limited thereto, and a method of displaying a mis-display alarm on the user terminals 400 and 500 may be variously changed.

However, the present invention is not limited thereto, and when the processor 21 of the user terminal 400 or 500 determines in step S109 that the first target image TI1 is different from the first reference image RI1, the data of the information on the display status of the target product T1 actually displayed on the shelf 30 may be transmitted to the user terminals 400 and 500.

Further, in step S111, the processor 11 of the server 300 may detect, from the planogram database 15, a target matching image including an image of the same target matching product as the target product determined to be different from the reference product.

For example, referring to FIGS. 6 and 7, the processor 11 may detect a target matching image TMI that is an image including the same target matching product P6 as the first target product T1 determined to be different from the first reference product P1, from the planogram through image analysis. The target matching image TMI may include a target matching electronic shelf label EL6 to which the target matching product P6 is assigned.

The processor 11 may provide data of location information assigned to the pattern code C6 of the target matching electronic shelf label EL6 to which the target matching product P6 is assigned to the user terminals 400 and 500. Accordingly, users of the user terminals 400 and 500 may acquire information on a location at which a mis-displayed product should have been originally displayed.

However, the present invention is not limited thereto and the processor 21 of the user terminal 400 or 500 may detect a target matching image that is an image including the same target matching product as the target product determined to be different from the reference product from the planogram database 15, and provide data of location information assigned to a pattern code of the target matching electronic shelf label EL6 included in the target matching image to the user terminals 400 and 500.

In addition, when the processor 11 of the server 300 determines in step S111 that the target image does not include any product including the reference product, a reference product out-of-stock alarm for the area corresponding to the location information assigned to the pattern code may be transmitted to the user terminals 400 and 500.

For example, referring to FIG. 9, the processor 11 may detect a second target image TI2 that does not include any product as an image of the area corresponding to the location information of the first pattern code C1 from the captured image.

When the processor 11 determines that the second target image TI2 does not include any product including the reference product P1, a reference product out-of-stock alarm for the area corresponding to the location information assigned to the first pattern code of the first electronic shelf label EL1 included in the second target image TI2 may be transmitted to the user terminals 400 and 500. Accordingly, the users of the user terminals 400 and 500 may acquire information indicating that the product assigned to the first electronic shelf label EL1 is out of stock.

For example, referring to FIG. 10, the product out-of-stock alarm may be displayed on the user terminals 400 and 500. For example, information on which location a specific product is out of stock at may be displayed on the user terminals 400 and 500. However, the present invention is not limited thereto, and a method of displaying the product out-of-stock alarm on the user terminals 400 and 500 may be changed variously.

However, the present invention is not limited thereto, and when the processor 21 of the user terminal 400 or 500 determines that the target image does not include any product including the reference product, the reference product out-of-stock alarm for the area corresponding to the location information assigned to the pattern code may be transmitted to the user terminals 400 and 500.

Furthermore, the method S100 may further include a step of receiving a product order user input for ordering the out-of-stock reference product and a step of transmitting the product order user input to the external seller server.

For example, in step S111, when the out-of-stock alarm for the first reference product P1 is displayed on the user terminals 400 and 500, the user may press the button of the first electronic shelf label EL1 to transmit the product order user input to the order user input processing unit 17.

However, the present invention is not limited thereto, and when the user clicks on the product order tab displayed on the user terminals 400 and 500, the product order user input may be transmitted to the order user input processing unit 17.

The order user input processing unit 17 may transmit the product order user input received from the user to the external seller server (not shown). The external seller server may receive the product order user input from the order user input processing unit 17, and the seller may deliver the product according to the received product order user input.

Furthermore, in step S111, when the type of target product included in the target image is the same as the type of reference product included in the reference image, and the number of target products is different from the number of reference products, the processor 11 of the server 300 may transmit data of information of the number of target products to the electronic shelf label 100 and the user terminals 400 and 500.

For example, referring to FIG. 11, the processor 11 may detect a third target image TI3 that includes a target product T7 that is of the same type as the reference product P1 but differs in the number, from the captured image, as the image of the area corresponding to the location information of the first pattern code C1.

For example, referring to FIGS. 7 and 11, when a type of target product T7 included in the third target image TI3 is the same as a type of first reference product P1 included in the first reference image RI1 and the number of target products T7 is different from the number of reference products P1, the processor 11 may transmit data of information of the number of target products T7 to the electronic shelf label 100 and the user terminals 400 and 500. The electronic shelf label 100 and the user terminals 400 and 500 may display information of the number of target products T7. In this case, the information of the number of target products T7 may include a current number of target products T7, sales rate, and the like.

In addition, when the type of target product T7 included in the third target image TI3 is the same as the type of first reference product P1 included in the first reference image RI1, and the number of target products T7 is equal to or larger than a threshold value, the processor 11 may transmit data of updated discount information for the target product T7 to the electronic shelf label 100 and the user terminals 400 and 500. The electronic shelf label 100 and the user terminals 400 and 500 may display the updated discount information of the target product T7.

For example, referring to FIG. 12, the electronic shelf label 100 may display the updated discount information of the target product T7 through the display module. Thus, discount information for promoting sales of the target products T7, the number of displayed target products being equal to or larger than the threshold value due to low sales, may be displayed on the electronic shelf label 100.

Further, the method S100 may further include a step of transmitting a pattern code display signal to the at least one electronic shelf label 100, and a step of capturing a captured image by the imaging device 200 photographing the area on the shelf 30 in which at least one electronic shelf label 100 and at least one product are provided, when the pattern code C1, C2, C3, C4, C5, or C6 is displayed on the at least one electronic shelf label 100 according to the pattern code display signal.

For example, the electronic shelf label 100 may display only the product-related information and not display the pattern code C1, C2, C3, C4, C5, or C6. When the pattern code display signal from the imaging device 200 or a separate signal transmission device is transmitted to the at least one electronic shelf label 100, the at least one electronic shelf label 100 may display the pattern code C1, C2, C3, C4, C5 or C6 on a portion of a surface of the display module. After the pattern code C1, C2, C3, C4, C5, or C6 is displayed on the at least one electronic shelf label 100, the imaging device 200 may photograph the area in which the electronic shelf label 100 and the products are provided to acquire a captured image.

The embodiment of the present invention described above may be implemented in the form of program instructions that can be executed through various computer components and recorded on a computer-readable recording medium. The computer-readable recording medium may include program instructions, data files, data structures, and the like alone or in combination. The program instructions recorded on the computer-readable recording medium may be program instructions specially designed and configured for the present invention or program instructions known and available to those skilled in the art of computer software. Examples of the computer-readable recording medium include a magnetic medium such as a hard disk, a floppy disk, and a magnetic tape, an optical recording medium such as a CD-ROM and a DVD, a magneto-optical medium such as a floptical disk, and a hardware device specially configured to store and execute program instructions, such as a ROM, a RAM, and a flash memory. Examples of the program instruction include not only machine language codes such as codes generated by a compiler, but also high-level language codes that can be executed by a computer using an interpreter, or the like. The hardware device may be changed into one or more software modules to perform the processing according to the present disclosure, and vice versa.

The specific executions described herein are exemplary and do not limit the scope of the present invention in any way. For the sake of brevity of the specification, description of conventional electronic components, control systems, software, and other functional aspects of the systems may be omitted. Further, connections or connection members between the components illustrated in the drawings are merely examples of functional connections and/or physical or circuit connections, and may be indicated as various functional connections, physical connections, or circuit connections that are replaceable or additional ones in an actual device. Further, when there is no specific mention such as "essential" and "important," a corresponding component may not be required for the application of the present invention.

Further, although the detailed description of the present invention has been described with reference to the preferred embodiments of the present invention, it will be understood by those skilled in the art or those with common knowledge in the art that the present disclosure can be variously modified and changed without departing from the spirit and technical scope of the present disclosure described in the claims to be described later. Therefore, the technical scope of the present disclosure should not be limited to the content described in the detailed description of the specification, but should be determined by the claims.

### INDUSTRIAL APPLICABILITY

The present invention has industrial applicability in that it is possible to automatically sense the display status of the products based on captured images acquired by photographing the products displayed on the shelf and the electronic shelf labels and providing information on the display status of the products to users in real time, thereby improving shopping convenience for consumers and product management efficiency for a product manager.

## Claims

1. A product display status monitoring method performed by a computing device including a processor configured to sense display status of products based on a captured image acquired by an imaging device capturing an area in which at least one electronic shelf label and at least one product are provided, the product display status monitoring method comprising:
identifying a pattern code displayed on the at least one electronic shelf label from the captured image;
acquiring location information assigned to the pattern code from a server;
detecting a target image that is an image of an area corresponding to the location information in the captured images;
detecting a reference image that is an image of the area corresponding to the location information in a planogram; and
comparing the target image with the reference image.

2. The product display status monitoring method of claim 1, further comprising:
transmitting data of information on a display status of the at least one product to a user terminal when it is determined that the target image is different from the reference image in the comparing of the target image with the reference image.

3. The product display status monitoring method of claim 2, wherein the transmitting of the data of the information on the display status of the at least one product to the user terminal includes transmitting a product mis-display alarm for an area corresponding to the location information assigned to the pattern code to the user terminal when it is determined that a type of target product included in the target image is different from a type of reference product included in the reference image.

4. The product display status monitoring method of claim 3, wherein the transmitting of the data of the information on the display status of the at least one product to the user terminal includes detecting a target matching image that is an image including target matching product same as the target product determined to be different from the reference product from the planogram, and providing data of location information assigned to a pattern code of an electronic shelf label to which the target matching product is assigned to the user terminal.

5. The product display status monitoring method of claim 2, wherein the transmitting of the data of the information on the display status of the at least one product to the user terminal includes transmitting a reference product out-of-stock alarm for an area corresponding to the location information assigned to the pattern code to the user terminal when it is determined that the target image does not include any product including a reference product included in the reference image.

6. The product display status monitoring method of claim 5, further comprising:
receiving a product order user input for ordering the out-of-stock reference product; and
transmitting the product order user input to an external seller server.

7. The product display status monitoring method of claim 2, wherein the transmitting of the data of the information on the display status of the at least one product to the user terminal includes transmitting information of the number of target products to the electronic shelf label and the user terminal when a type of target product included in the target image is the same as a type of reference product included in the reference image and the number of target products is different from the number of reference products.

8. The product display status monitoring method of claim 2, wherein the transmitting of the data of the information on the display status of the at least one product to the user terminal includes transmitting data of updated discount information for the target products to the electronic shelf label and the user terminal when a type of target product included in the target image is the same as a type of reference product included in the reference image and the number of target products is equal to or larger than a threshold value.

9. The product display status monitoring method of claim 1, further comprising: before the identifying of the pattern code,
transmitting a pattern code display signal to the at least one electronic shelf label; and
capturing, by the imaging device, an area in which the at least one electronic shelf label and the at least one product are provided to acquire the captured image when the pattern code is displayed on the at least one electronic shelf label according to the pattern code display signal.

10. A product display status monitoring system for sensing a display status of at least one product provided on a shelf, the product display status monitoring system comprising:
at least one electronic shelf label provided at a location corresponding to the at least one product, and displaying a pattern code;
an imaging device configured to capture an area in which the at least one electronic shelf label and the at least one product is provided and acquire a captured image; and
a computing device including a memory configured to store a program for performing a product display status monitoring method for sensing the display status of the at least one product based on the captured image, and a processor configured to execute the program;
wherein the product display status monitoring method comprises:
identifying a pattern code displayed on the at least one electronic shelf label from the captured image;
acquiring location information assigned to the pattern code from a server;
detecting a target image that is an image of an area corresponding to the location information in the captured images;
detecting a reference image that is an image of the area corresponding to the location information in a planogram; and
comparing the target image with the reference image.

11. The product display status monitoring system of claim 10, further comprising:
transmitting data of information on a display status of the at least one product to a user terminal when it is determined that the target image is different from the reference image in the comparing of the target image with the reference image.

12. The product display status monitoring system of claim 11, wherein the displaying of the information on the display status of the at least one product on the user terminal includes providing product mis-display alarm for an area corresponding to the location information assigned to the pattern code to the user terminal when it is determined that a type of target product included in the target image is different from a type of reference product included in the reference image.

13. The product display status monitoring system of claim 11, wherein the displaying of the information on the display status of the at least one product on the user terminal includes providing a reference product out-of-stock alarm for an area corresponding to the location information assigned to the pattern code to the user terminal when it is determined that the target image does not include any product including a reference product included in the reference image.
